Europäisches Patentamt

(19) European Patent Office

Office européen des brevets

(11) Publication number: **0 228 176**
**B1**

# EUROPEAN PATENT SPECIFICATION

(12)

(45) Date of publication of the patent specification:
14.11.90

(21) Application number: **86308917.3**

(22) Date of filing: **14.11.86**

(51) Int. Cl.⁵: **F02M 37/00**

(54) Fuel tank equalizing system.

(30) Priority: **24.12.85 US 813364**

(43) Date of publication of application:
**08.07.87 Bulletin 87/28**

(45) Publication of the grant of the patent:
**14.11.90 Bulletin 90/46**

(84) Designated Contracting States:
**DE ES FR GB**

(56) References cited:
**GB-A- 1 581 978**
**GB-A- 2 124 703**
**US-A- 2 703 607**
**US-A- 3 021 855**

(73) Proprietor: **FORD MOTOR COMPANY LIMITED, Eagle Way, Brentwood Essex CM13 3BW(GB)**
(84) Designated Contracting States: **GB**

(73) Proprietor: **FORD-WERKE AKTIENGESELLSCHAFT, Werk Köln-Niehl Henry-Ford-Strasse Postfach 60 40 02, D-5000 Köln 60(DE)**
(84) Designated Contracting States: **DE**

(73) Proprietor: **FORD FRANCE SOCIETE ANONYME, 344 Avenue Napoléon Bonaparte B.P. 307, F-92506 Rueil Malmaison Cedex(FR)**
(84) Designated Contracting States: **FR**

(73) Proprietor: **Ford Motor Company, The American Road, Dearborn, MI 48121(US)**
(84) Designated Contracting States: **ES**

(72) Inventor: **Davis, Paul O., 24611 Calvin, Dearborn Michigan 48124(US)**

(74) Representative: **Messulam, Alec Moses et al, A. Messulam & Co. 24 Broadway, Leigh on Sea Essex SS9 1BN(GB)**

## Description

This invention relates to a fuel tank system for use in conjunction with a fuel burning engine.

Multiple fuel tank installations have been used with liquid fuel burning engines for a variety of reasons. Multiple tank installations are useful where, for example, a single tank having a sufficient volume cannot be installed due to interference from other components of the machine. In other instances, multiple tanks are preferably because the weight balance of the machine the tanks are used with will not be disturbed by the distributed mass of the fuel. A major drawback to the use of multiple fuel tank arrangements is the fact that the fuel level existing between the various tanks must be managed to avoid running the fuel consuming device, e.g., an engine, out of fuel while fuel remains in one of the tanks. To prevent this occurrence a variety of schemes has been devised. U.S. Patent 2 840 147 discloses a classical solution to the problem of managing fuel between two volumes, in which a manual selector valve is employed to preferentially tap one volume or another. Another prior art system relies upon either manual or automatic means for switching fuel consumption between a large capacity tank and a small capacity tank. Both of these systems suffer from problems associated with their selector valves inasmuch as mispositioned or malfunctioning selector valves can cause the device running on liquid fuel to run out of fuel while additional fuel remains in one or more of the tanks.

U.S. Patent 3,884,255 discloses a fuel tank system having a solenoid operated fuel selector valve for connecting one of two suction lines extending to separate fuel tanks with a common fuel supply line. U.S. Patent 3,825,027 discloses a float controlled fuel tank control valve assembly for automatically supplying fuel to an engine from one of several fuel tanks connected to an engine through a tank selector valve. This system, as well as the systems disclosed in the previously mentioned patents, relies upon the function of a valve to control fuel flow from separate tank volumes and is therefore subject to malfunction based upon any of the reasons that complex valve and solenoid systems fail, such as corrosion, breakage of wiring, switch gear failures, etc.

U.S. Patent 3,981,321 discloses a self-regulating fuel level equalizing system for internal combustion engines of motor vehicles which relies upon feed conduits having about equal length and about equal inner diameter and about equal fuel flow restrictions and having lower portions with open ends each disposed about the same level for automatic preferential fuel withdrawal from the fuller of the connected fuel tanks. Of course, this system will have several drawbacks inasmuch as fuel tanks often can not be installed such that the fuel supply line from each will offer the same pressure drop for a given flow rate because it is not always possible to route lines such that they are of equal length and have the same number of bends.

U.S. Patent 2,703,607 discloses a multiple cell fuel tank arrangement in which a system of check valves connecting the cells at their lower extremity is combined with tubes to equalize fuel levels between the various cells. This arrangement cannot be used with a divided tank system in which the lower extremities of the tanks are not connected.

U.S. Patent 3,021,855 discloses a self-motivating automatic syphoning and equalizing tank system in which a syphon running between the large volumes of a saddle tank for use with a truck is intended to be primed by the sloshing of the fuel within the tank resulting from the vehicle motion. This system cannot work where sloshing does not occur due to vehicle motion as would be the case if the tanks were well baffled or the system were used with a stationary engine installation or in any other situation in which the self-priming feature could not be relied upon.

It is an object of the present invention to provide a fuel tank equalizing system which does not rely upon any remotely controlled valves whether solenoid or manually operated.

It is a further object of the present invention to provide a fuel tank equalizing system which may be employed without the use of a cross-over tube extending between the lower extremities of the connected volumes.

It is a further object of the present invention to provide a fuel tank equalizing system which is simple in construction.

It is yet a further object of the present invention to provide a fuel tank equalizing system which is automatic in operation and needs no intervention from the operator of the vehicle or other control device.

It is yet a further object of the present invention to provide a fuel tank equalizing system which is readily adaptable for use with diesel or other fuel injected engines having existing by-pass flow to and from their fuel injection systems.

According to the present invention there is provided a system for equalizing the distribution of liquid fuel between a primary fuel volume (2) and a secondary fuel volume (4) used in conjunction with a fuel burning engine comprising, a fuel piping (8, 12) for connecting said primary volume (2) to said engine and a fuel pump (34, 34a) for conveying fuel from said primary fuel volume (2) to said engine, said system further including a syphon (18) connecting said primary and secondary fuel volumes, characterised by means (14, 14a, 16, 16a, 36) associated with said fuel pump (34, 34a) for establishing flow within said syphon (18) whereby said fuel will be caused to flow from said secondary fuel volume (4) to said primary fuel volume (2), said flow establishing means including means for creating a low pressure region in a section of said piping (8, 12) and a conduit (16) having a first end connected to said low pressure section of said piping and a second end connected to said syphon (18).

The means for establishing flow within the syphon may include a venturi positioned in a fuel pipe extending between the engine and one of the fuel volumes and a conduit having a first end connected to the low pressure section of the venturi and a second end connected to the syphon such that the conduit and venturi will establish flow within the syphon. Alternatively, a flow restrictor may be placed ahead of the fuel pump inlet such that a conduit connected to the fuel pipe between the flow restrictor and the pump inlet and further connected to the syphon will establish fuel flow within the syphon.

In the event that a venturi is used in the system of the present invention it may be located in a fuel pipe through which the fuel is returned to the primary volume from the engine, or alternatively it may be located in the fuel pipe in which the fuel passes from the primary fuel volume to the engine.

The invention will now be described further by way of example with reference to the accompanying drawings in which :

Figure 1 is a schedmatic drawing of the first embodiment of the fuel tank equalizing system of the present invention.

Figure 2 is a cross section of the venturi assembly incorporated in the fuel tank equalizing system illustrated in Figure 1.

Figure 3 is a schematic drawing of a second embodiment of the fuel tank equalizing system of the present invention.

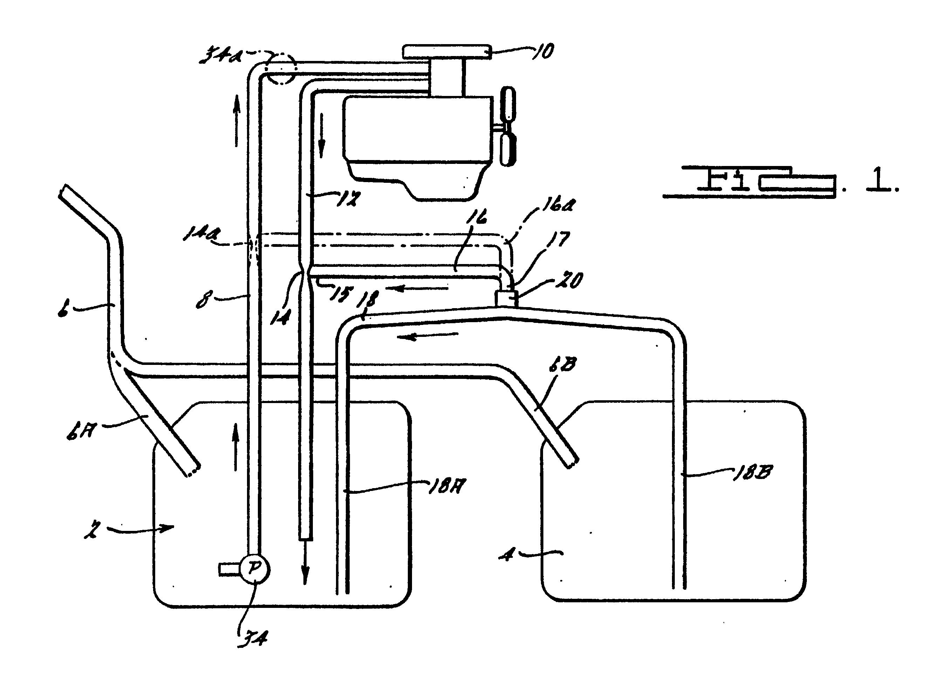

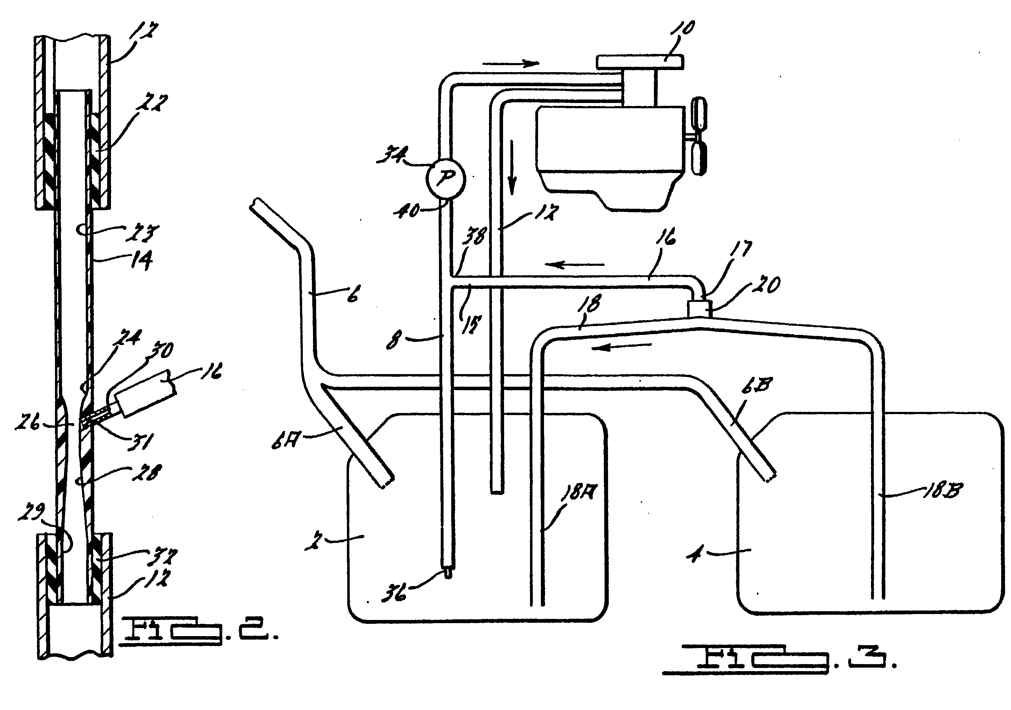

As shown in Figure 1, the fuel tank equalizing system of the present invention is suitable for use with multiple fuel tanks. In view of this disclosure those skilled in the art will realise that the present invention is also suitable for use with a single fuel tank having divided volumes. Fuel is introduced to the tank through fill pipe 6 which has branches 6a and 6b for filling volumes 2 and 4 respectively. Volume 2 is a primary fuel volume while volume 4 is a secondary fuel volume. Any desired number of secondary fuel volumes can be used with the equalizing system of the present invention. Fuel is withdrawn from primary fuel volume 2 by fuel pump 34 which is positioned within the primary volume. Pump 34 discharges fuel into fuel pipe 8 which extends between the fuel pump and fuel consuming device 10. In this case an internal combustion engine. It is to be understood that fuel consuming device could be any type of engine or any other energy consuming machine supplied by a fuel system which circulates fuel between the machine and the fuel tank. Those skilled in the art will appreciate, in view of this disclosure, that the fuel pump could be mounted on the engine as well. As further shown in Figure 1, fuel returns from the engine to the fuel tank by way of fuel pipe 12. Such an arrangement is commonly utilized with diesel engines and other sorts of engines including gasoline engines with fuel injection systems. Such engines typically circulate a relatively great volume of fuel continuously while utilizing only a small portion of the fuel and returning the balance to the tanks. The return flow through pipe 12 passes through venturi assembly 14 shown in detail in Figure 2. The venturi is sealed to fuel pipe 12 by means of rubber bushings 22 and 32. Although the fuel pipe is shown as being of metallic construction, other constructions are possible such as ferrous and nonferrous metals, plastics, various elastomers and other materials.

Leading section 23 of venturi 14 is upstream of the low pressure section of the venturi and is attached directly to the fuel line by means of rubber bushing 22. Converging section 24 of venturi, which adjoins leading section 23, is characterized by the usual reduction in flow diameter found in a venturi. Low pressure connector 30 is mounted at throat 26, which marks the minimum diameter of the venturi. This connector comprises a short length of tubing fitted to a radial bore 31 formed in the venturi. Although metallic tubing is preferred for the connector, other materials could be utilized such as plastics, or composites. Diverging section 28 is located immediately downstream from throat 25 and adjoins trailing section 29 which is connected by means of rubber bushing 32 to the downstream side of fuel pipe 12.

Although venturi 14 is illustrated as being in pipe 12, those skilled in the art will appreciate in view of this disclosure that the venturi could be positioned in the fuel pump's suction line. This is particularly so where fuel pump 34 is located at the engine or other fuel consuming device. These alternate locations for fuel pump 34, venturi 14, and conduit 16 are shown in broken lines identified by numerals 34a, 14a, and 16a, respectively, in Figure 1.

Low pressure connector 30 provides a source of vacuum for operating the syphon of the present invention because the flow through the venturi results in a low pressure at throat 26, which is tapped by low pressure connector. Connector 30 is attached to the first end, 15, of conduit 16 which has a second end, 17, attached to syphon 18 at the highest point of the syphon. Porous metal filter 20 is fitted to second end 17 of the conduit and functions to prevent contamination from entering conduit 16 and consequently plugging low pressure connection 30. In view of this disclosure those skilled in the art will appreciate that other filter media could be employed in addition to a porous metal element.

Venturi assembly 14 is preferably injection molded of a plastic material such as nylon but other materials and methods of construction are possible, such as molding or casting of ferrous or nonferrous metals or other plastic compositions or machining of the venturi assembly from any of these materials.

Syphon 18 extends between the lower portion of primary fuel volume 2 and the lower portion of secondary fuel volume 4. As shown in Figure 1, leg 18a of syphon 18 extends into fuel volume 2 whereas leg 18b of syphon 18 extends into fuel volume 4. When engine 10 is in operation, fuel pump 34 sends fuel continuously through fuel pipe 8 to the engine and fuel returns continuously through fuel pipe 12 through venturi 14 and then into primary fuel volume 2. The flow of fuel through venturi assembly 14 produces a low pressure at throat 26 which is communicated to conduit 16 by means of low pressure connector 30. Conduit 16 may comprise a rubber tube or a metallic or plastic tube depending upon the choice of the designer. The low pressure condition at the throat of the venturi communicated by low pressure connector 30 and conduit 16 to syphon 18 causes any air within syphon 18 to be purged through conduit 16 along with a quantity of liquid fuel which will join the stream within fuel pipe 12. Simultaneously, syphon action will be started between secondary fuel volume 4 and primary fuel volume 2. This syphoning action will be continuous and will automatically cause the level of fuel within the primary and secondary fuel volumes to be equalized because fuel consumed from volume 2 will be replaced by fuel from volume 4. This equalization occurs without the intervention of any solenoid or valve switching or intervention by the vehicle operator and requires only that the engine be operated so as to establish a flow of fuel through fuel pipe 12 and venturi assembly 14. Because no connection is required between the lower extremities of the fuel volumes in addition to that provided by the syphon, other machinery such as an automotive driveshaft or exhaust pipe could be located between the fuel volumes without interferring therewith.

Figure 3 illustrates a second embodiment of the present invention in which a low pressure region is formed between flow restrictor 36, which is applied to the inlet of fuel pipe 8, and inlet 40 to fuel pump 34. Low pressure connector 38 is attached to fuel pipe 8 between flow restrictor 36 and pump inlet 40. The flow restrictor preferably comprises an orifice which is sized such that the progression of fuel through the orifice will be obstructed to a degree that a low pressure region will be formed between the restrictor and the inlet to the fuel pump, but without excessive restriction which would starve the engine for fuel. The low pressure connector is attached to the first end, 15, of conduit 16, which has a second end, 17, attached to syphon 18 at the highest point of the syphon. As before, syphon 18 has two ends, 18A and 18B extending into fuel volumes 2 and 4, respectively.

The system of Figure 3 operates to equalize the level of fuel within volumes 2 and 4 as follows. During operation of the fuel consuming device, e.g., engine 10, fuel is pumped to engine 10 by means of fuel pump 34, which is connected to fuel volume 2 by fuel pipe 8. Flow restrictor 36 causes a pressure depression within the section of fuel pipe 8 extending between flow restrictor 36 and fuel pump inlet 40. This depression is communicated to syphon 18 by means of conduit 16 and low pressure connection 38. As a result, syphon 18 draws fuel from volume 4 into volume 2 to replace fuel consumed by engine 10.

## Claims

1. A system for equalizing the distribution of liquid fuel between a primary fuel volume (2) and a secondary fuel volume (4) used in conjunction with a fuel burning engine comprising, a fuel piping (8, 12) for connecting said primary volume (2) to said engine and a fuel pump (34, 34a) for conveying fuel from said primary fuel volume (2) to said engine, said system further including a syphon (18) connecting said primary and secondary fuel volumes, characterised by means (14, 14a, 16, 16a, 36) associated with said fuel pump (34, 34a) for establishing flow within said syphon (18) whereby said fuel will be caused to flow from said secondary fuel volume (4) to said primary fuel volume (2), said flow establishing means including means for creating a low pressure region in a section of said piping (8, 12) and a conduit (16) having a first end connected to said low pressure section of said piping and a second end connected to said syphon (18).

2. A system according to Claim 1, wherein said means for creating a low pressure region comprises a venturi (14) positioned in said fuel piping.

3. A system according to Claim 2, wherein said piping includes a fuel supply pipe (8) through which fuel passes from said primary fuel volume (2) to said engine and a fuel return pipe (12) through which fuel is returned to said primary fuel volume (2) from said engine and said venturi (14) is located in said fuel return pipe (12).

4. A system according to Claim 2, wherein said piping includes a fuel supply pipe (8) through which fuel passes from said primary fuel volume to said engine and said venturi (14a) is located in said fuel supply pipe (8).

5. A system according to any one of Claims 2 to 4, wherein said venturi includes a leading section (23) a converging section (24) adjoining said leading section, a throat (26) adjoining said converging section, a diverging section (28) adjoining said throat and a trailing section (29) adjoining said diverging section, said first end of said conduit (16) being connected to said throat (26) of said venturi.

6. A system according to Claim 1, wherein said piping (8, 12) includes a fuel supply pipe (8) through which fuel passes from said primary fuel volume (2) to said engine, and said means for creating a low pressure region includes a flow restrictor (36) positioned in said fuel pipe between the inlet (40) of said pump (34) and said primary fuel volume (2) said first end of the conduit being connected to said fuel pipe between said flow restrictor (36) and said pump inlet (40).

## Patentansprüche

1. System zum Ausgleich der Verteilung flüssigen Brennstoffs zwischen einem in Verbindung mit einem Brennstoff verbrennenden Motor verwendeten primären Brennstoffvolumen (2) und einem sekundären Brennstoffvolumen (4), bestehend aus Brennstoffrohrleitungen (8, 12) zum Anschluß dieses primären Volumens (2) an jenen Motor, und einer Brennstoffpumpe (34, 34a) zur Förderung von Brennstoff aus diesem primären Brennstoffvolumen (2) zu jenem Motor, wobei dieses System ferner einen dieses erste und zweite Brennstoffvolumen verbindenden Siphon (18) enthält, gekennzeichnet durch dieser Brennstoffpumpe (34, 34a) zugeordnete Vorrichtungen (14, 14a, 16, 16a) zur Erzeugung einer Strömung innerhalb dieses Siphons (18), um so besagten Brennstoff aus jenem sekundären Brennstoffvolumen (4) in besagtes erstes primäres Brennstoffvolumen (2) strömen zu lassen, wobei diese strömungserzeugenden Vorrichtungen Mittel zur Schaffung eines Unterdruckbereiches in einem Abschnitt jener Rohrleitungen (8, 12) und eine Leitung (16) mit einem ersten, an besagten Niederdruckabschnitt jener Rohrleitungen angeschlossenen Ende und einem zweiten, an besagten Siphon (18) angeschlossenen Ende einschließen.

2. System nach Anspruch 1, worin diese Mittel zur Schaffung eines Unterdruckbereiches aus einem in besagten Brennstoffrohrleitungen angeordneten Venturi (14) bestehen.

3. System nach Anspruch 2, worin zu diesen Rohrleitungen eine Brennstoffversorgungsleitung (8), durch welche Brennstoff aus jenem primären Brennstoffvolumen (2) zu jenem Motor gelangt, und eine Brennstoffrückführleitung (12), durch welche Brennstoff von jenem Motor zu diesem primären Brennstoffvolumen (2) zurückgeführt wird, gehören und besagter Venturi (14) in dieser Brennstoffrückführleitung (12) angeordnet ist.

4. System nach Anspruch 2, worin zu diesen Rohrleitungen eine Brennstoffversorgungsleitung (8), durch welche Brennstoff aus besagtem primären Brennstoffvolumen zu jenem Motor gelangt, gehört und besagte Venturi (14a) in dieser Brennstoffversorgungsleitung (8) angeordnet ist.

5. System nach einem der Ansprüche 2 bis 4, worin dieser Venturi einen Vorderabschnitt (23), einen daran anschließenden, sich verjüngenden Abschnitt (24), eine daran anschließende Kehle (26), einen daran anschließenden, sich erweiternden Abschnitt (28) und einen daran anschließenden Hinterabschnitt (29) umfaßt, wobei besagtes erstes Ende jener Leitung (16) mit besagter Kehle (26) in diesem Venturi verbunden ist.

6. System nach Anspruch 1, worin zu diesen Rohrleitungen (8, 12) eine Brennstoffversorgungsleitung (8) gehört, durch welche Brennstoff aus besagtem primären Brennstoffvolumen (2) zu jenem Motor gelangt, und jene Mittel zur Schaffung eines Unterdruckbereiches eine in jener Brennstoffleitung zwischen dem Einlaß (40) zu besagter Pumpe (34) und jenem primären Brennstoffvolumen (2) angeordnete Strömungsdrossel (36) enthalten, wobei jenes erste Ende der Leitung an diese Brennstoffleitung zwischen besagter Strömungsdrossel (36) und besagtem Pumpeneinlaß (40) angeschlossen ist.

## Revendications

1. Ensemble d'égalisation de la répartition d'un carburant liquide entre un volume principal (2) et un volume secondaire (4) de carburant, utilisé avec un moteur consommant du carburant, comprenant une tuyauterie de carburant (8, 12) destinée à connecter le volume principal (2) au moteur et une pompe de carburant (34, 34a) destinée à transporter le carburant du volume principal (2) au moteur, l'ensemble comprenant en outre un siphon (18) raccordant les volumes principal et secondaire de carburant, caractérisé par un dispositif (14, 14a, 16, 16a, 36) associé à la pompe de carburant (34, 34a) et destiné à établir un courant dans le siphon (18), si bien que le carburant s'écoule du volume secondaire (4) de carburant vers le volume principal (2), le dispositif destiné à établir le courant comprenant un dispositif destiné à créer une région à basse pression dans un tronçon de la canalisation (8, 12) et un conduit (16) ayant une première extrémité connectée à la section à basse pression de la tuyauterie et une seconde extrémité connectée au siphon (18).

2. Ensemble selon la revendication 1, caractérisé en ce que le dispositif destiné à créer une région à basse pression comporte un venturi (14) placé dans la canalisation de carburant.

3. Ensemble selon la revendication 2, dans lequel la canalisation comporte une tuyauterie (8) d'alimentation en carburant dans laquelle circule le carburant provenant du volume principal (2) et dirigé vers le moteur et une tuyauterie (12) de retour de carburant par laquelle le carburant est renvoyé dans le volume principal (2) de carburant à partir du moteur, et le venturi (14) est placé dans la tuyauterie (12) de retour de carburant.

4. Ensemble selon la revendication 2, dans lequel la canalisation comporte une tuyauterie (8) d'alimentation en carburant dans laquelle circule le carburant provenant du volume principal et dirigé vers le moteur, et le venturi (14a) est placé dans la tuyauterie (8) d'alimentation en carburant.

5. Ensemble selon l'une quelconque des revendications 2 à 4, dans lequel le venturi comporte un tronçon antérieur (23), un tronçon convergent (24) adjacent au tronçon antérieur, un col (26) adjacent au tronçon convergent, un tronçon divergent (28) adjacent au col et un tronçon postérieur (29) adjacent au tronçon divergent, la première extrémité du conduit (16) étant reliée au col (26) du venturi.

6. Ensemble selon la revendication 1, dans lequel la canalisation (8, 12) comporte une tuyauterie (8) d'alimentation en carburant dans laquelle s'écoule le carburant provenant du volume principal (2) de carburant et dirigé vers le moteur, et le dispositif destiné à créer une région à basse pression comporte un rétrécissement (36) placé dans la tuyauterie de carburant entre l'entrée (40) de la pompe (34) et le volume principal (2), la première extrémité du conduit étant reliée à la tuyauterie de carburant entre le rétrécissement (36) et l'entrée (40) de la pompe.

FIG. 1.

EP 0 228 176 B1

FIG. 3.

FIG. 2.